# EUROPEAN PATENT SPECIFICATION

(11) **EP 4 039 436 B1**
(45) Date of publication and mention of the grant of the patent: **18.06.2025**
(21) Application number: 21155026.4
(22) Date of filing: 03.02.2021
(51) Int. Cl.: B29C 37/00, B29D 99/00, B29C 70/44, B29C 70/86, F03D 1/06, B29C 70/84, B29C 70/32, B29L 31/08, B29L 31/00

(54) **A METHOD OF MANUFACTURING A WIND TURBINE ROTOR BLADE ELEMENT WITH A METAL INSERT**
VERFAHREN ZUR HERSTELLUNG EINES WINDTURBINENROTORBLATTELEMENTS MIT EINEM METALLEINSATZ
PROCÉDÉ DE FABRICATION D'UN ÉLÉMENT DE PALE DE ROTOR D'ÉOLIENNE AVEC UN INSERT MÉTALLIQUE

(43) Date of publication of application: 10.08.2022
(73) Proprietor: Nordex Blade Technology Centre APS, 5771 Stenstrup (DK)
(72) Inventor: SØRENSEN, Flemming, 5700 Svendborg (DK)
(74) Representative: Hauck Patent- und Rechtsanwälte PartmbB

(56) References cited:
- WO-A1-2017/215735
- GB-A- 2 569 297
- US-A- 5 281 454
- US-A1- 2020 263 658
- US-A1- 2020 347 820

## Description

The invention relates to a method of manufacturing a wind turbine rotor blade element with a metal insert.

Wind turbine rotor blades typically comprise large structures of laminated, fibre reinforced plastics. For joining these structures to other elements, it is known to anchor metal inserts in the laminated structures. For example, many wind turbine rotor blades have a root section with integrated metal inserts including threaded bores. They are joined to a wind turbine rotor hub by means of bolts guided through holes in a wind turbine rotor hub flange and screwed into the threaded bores of the metal inserts. Similar connections can be made between adjacent sections of a wind turbine rotor blade divided into two or more longitudinal sections. In this case, metal inserts can be integrated into one or both of the adjacent sections.

Since all of these connections are subject to extreme loads, obtaining a strong bond between the metal inserts and the surrounding laminate is essential. To this end, different techniques have been suggested.

The document EP 2 781 344 B1 discloses a method of manufacturing a portion of a wind turbine blade using so-called pre-impregnated metal inserts. The pre-impregnated metal inserts consist of a metal insert covered with a layer of pre-impregnated fibres which is cured before the pre-impregnated metal insert is integrated in a laminated blade structure.

From the document DE 10 2015 007 977 A1, it has become known to place numerous steel inserts in a mould along the circumference of a wind turbine rotor blade root between inner and outer fibre layers. Before placing the steel inserts in the mould, upper and lower surfaces of the steel inserts are provided with a thin layer of silicon oxide and with a layer of an adhesive, namely an epoxy resin or a polyurethane adhesive.

From the document EP 3 121 441 A1 a method of manufacturing a root assembly for a wind turbine rotor blade has become known. Metal inserts are arranged in a circumferential gap between inner and outer layers of a thermoplastic material. The metal inserts are also surrounded with a thermoplastic material. By applying heat, the metal inserts shall be welded to the inner and outer layers.

From the document WO 2017/215735 A1 a method for manufacturing a connection structure of a wind turbine rotor blade has become known. Metal inserts are wrapped in a fibre layer before being placed between inner and outer fibre layers of a blade root section. Then, the entire structure is infused with a resin and cured.

From the document EP 3 441 567 A1 a method of manufacturing a wind turbine rotor blade root section has become known. On top of fibre layers laid in a mould, a layer of an adhesive, for example a semi-cured epoxy resin, is placed. Metal inserts are arranged on top of the adhesive layer. On top of the metal inserts, another layer of an adhesive and further fibre layers are arranged. A liquid resin is infused and then cured together with the adhesive.

From the document US 2020/0263658 A1 a method of manufacturing a wind turbine rotor blade root end structure has become known. The root end structure comprises a plurality of fastening inserts distributed along a root end of a blade part, wherein a plurality of pultruded elements are arranged in between the fastening inserts. Gaps between the pultruded elements and the fastening inserts can be filled with a fibre material wrapped around the inserts.

From the document US 2020/0347820 A1 a method with the features of the preamble of claim 1 has become known. Inserts used in the method are wrapped in several layers of a dry fibre material together forming a so-called transition layer.

Starting therefrom, it is an object of the invention to provide a method of manufacturing a wind turbine rotor blade element with a metal insert, wherein the method is easy to use and delivers a consistent anchoring of a metal insert in a surrounding composite material.

This problem is solved by the method of manufacturing a wind turbine rotor blade element with the features of independent claim 1. Advantageous aspects of the invention are given in the dependent claims.

The method is defined in claim 1.

The invention is based on the fact that the materials used for manufacturing of wind turbine rotor blades are not always of the same quality. When looking at the connection of a metal insert to a surrounding composite material, varying characteristics of the metal insert have been addressed by specific surface treatments, such as sand blasting or coating with silicon dioxide. The inventor realized that another important factor to be taken into account are varying characteristics of the liquid plastics material and the laminate material. Both materials are needed in large quantities, and sourcing from different chemical companies may be necessary, in particular for manufacturing sites located in different geographic regions. **In** some cases, small variations of the liquid plastics material have a surprisingly large effect on the bonding quality, even if the surface characteristics of the metal insert are perfectly controlled. Variations in the laminate material lead to changing stiffness in the composite material and influence the bonding strength.

The invention overcomes these difficulties by applying an interface layer between the metal insert and the liquid plastics material. The interface layer on the one hand forms strong bonds with the metal insert surface as well as with the surrounding composite material formed by embedding fibre layers in the liquid plastics material. On the other hand, the interface layer prevents the metal insert's surface at least partly from getting into direct contact with the liquid plastics material, and therefore also has a decoupling effect. It has been found that by means of the interface layer, it is easier to consistently obtain a sufficiently strong anchoring of the metal insert in the composite material. The inventive manufacturing method for this reason helps meeting the specifications even if the quality of the liquid plastics material varies to some extent.

The wind turbine rotor blade element may be an essentially complete wind turbine rotor blade or any part or section thereof, for example a pressure side-half shell, a suction side-half shell, a section of a wind turbine rotor blade divided into two or more longitudinal sections, or a segment or part of such a section. The wind turbine rotor blade element may extend over the entire length of the wind turbine rotor blade (from a wind turbine rotor blade root to a wind turbine rotor blade tip), or only over a section of this length. This section may include either the wind turbine rotor blade root or the wind turbine rotor blade tip or none of them. The wind turbine rotor blade element may comprise an outer surface that forms an aerodynamic surface of the wind turbine rotor blade, for example if the wind turbine rotor blade element is a wind turbine rotor blade half shell. In the alternative, the wind turbine rotor blade element may be an inner reinforcing member of a wind turbine rotor blade, such as a spar or spar cap or a longitudinal section thereof, or a ring-shaped or ring-section-shaped reinforcing member to be integrated into a wind turbine rotor blade root or adjacent to a segmentation plane of a wind turbine rotor blade divided into two or more longitudinal sections.

The metal insert may have a generally cylindrical shape. It may be a sleeve comprising, as the joining portion, a threaded bore, or a bolt comprising, as the joining portion, an outer thread. The circumferential outer surface may be cylindrical, however, it may also have a varying diameter, for example comprising a conical shape. The longitudinal axis of the metal insert may be aligned with a longitudinal direction of the wind turbine rotor blade element and/or a longitudinal direction of the wind turbine rotor blade for which the wind turbine rotor blade element is used. Of course, the wind turbine rotor blade element may include any number of metal inserts, for example arranged side-by-side and/or with parallel longitudinal axes. The metal insert may consist of any suitable metal, in particular of steel or aluminium or an alloy of these and/or other metals.

After having wrapped the metal insert in the interface layer and in the first fibre layer, the interface layer is arranged between the circumferential outer surface of the metal insert and the first fibre layer, so that one side of the interface layer is in contact with the circumferential outer surface and the other side of the interface layer is in contact with the first fibre layer. As has been explained above, the interface layer therefore can perform its double function of forming a strong bond between the metal insert and the surrounding composite material, and of "decoupling" the metal insert from the liquid plastics material.

The interface layer can be handled as a layer, so that it can be wrapped around the metal insert, either alone or in combination with the first fibre layer (see below). This requires a certain level of rigidity of the interface layer and excludes liquid materials having a low viscosity, such as liquid plastics materials commonly used for impregnating fibre materials processed by hand lay-up or applied by resin infusion. However, the interface layer is a curable material that, before it has been cured, can easily be plastically deformed so that it can be wrapped around the metal insert.

The interface layer in general prevents the liquid plastics material from contacting the circumferential outer surface directly, so the interface layer forms a closed layer which is substantially impermeable for the liquid plastics material. However, when wrapping the metal insert in the interface layer and the first fibre layer, some fibres of the first fibre layer may be pressed partly or fully into the interface layer.

The first fibre layer and the second fibre layers may comprise any suitable reinforcing fibres, such as glass or carbon fibres, etc. The first fibre layer and the second fibre layer may comprise the same type or different types of reinforcing fibres. The first fibre layer and/or the second fibre layers may be placed in the mould in dry form. However, it is also possible to use a combination of dry fibre layers and pre-impregnated fibre layers.

The step of embedding the plurality of second fibre layers and the wrapped metal insert in a liquid plastics material may be carried out with any suitable technique, in particular by means of vacuum infusion. The liquid plastics material will penetrate the second fibre layers and any other dry fibre materials present in the mould, possibly including the first fibre layer. The liquid plastics material and the interface layer will be cured together in the mould, if desired by applying heat (tempering).

According to an aspect, in a first step, before wrapping the metal insert, a flat, half-finished product is formed which comprises the interface layer and the first fibre layer, wherein the half-finished product in a second step is wrapped around the metal insert. By combining the interface layer and the first fibre layer to a half-finished product, wrapping the metal insert in these two layers can be carried out in a single process. Moreover, combining both layers before carrying out the wrapping process can make it easier to position the interface layer relative to the first fibre layer exactly as desired.

According to an aspect, forming the half-finished product comprises placing the interface layer on top of the first fibre layer. This can be done in particular on a flat support such as a work table. It is then particularly easy to position the metal insert with reference to the interface layer.

According to an aspect, forming the half-finished product comprises pressing the interface layer on the first fibre layer, while an upper side of the interface layer is covered with a protective film. Pressing can be done for example with a roller rolled over the protective film. Some fibres of the first fibre layer may be pressed into the interface layer. Pressing the interface layer on the first fibre layer ensures a direct contact between the interface layer and the first fibre layer, so that when embedding the wrapped insert in the liquid plastics material, there will be no dead volumes between the two layers which could otherwise be filled with liquid plastics material.

According to an aspect, the protective film is removed before or during the second step. In particular, the protective film may remain on the interface layer just until the metal insert is wrapped therein. The upper surface of the interface layer then is in optimal condition for making contact to the circumferential outer surface of the metal insert.

According to an aspect, wrapping the half-finished product around the metal insert comprises placing the half-finished product on a flat support, placing the metal insert on the half-finished product and rolling the metal insert around its longitudinal axis. By rolling the metal insert on the flat support, a suitable compression force can be applied so that the interface layer will be arranged in direct contact with the circumferential outer surface, and the half-finished product will form a tight-fitting sheath surrounding the metal insert.

According to an aspect, the interface layer is a layer of an adhesive material comprising the same type of polymers as the liquid plastics material. For example, both materials may be based on polyester or epoxy resin. The interface layer may have a chemical formulation such that is almost rigid at room temperature, while the liquid plastics material then has a low viscosity.

According to an aspect, the first fibre layer is a layer of unidirectional fibres which are aligned with the longitudinal axis of the metal insert when the first fibre layer has been wrapped around the metal insert. This is ideal for transferring loads acting in the longitudinal direction from the metal insert to the surrounding composite material, and vice versa.

According to an aspect, the first fibre layer is provided as a pre-cut having a width and a length, wherein the length is larger than a length of the metal insert and the width is larger than a circumference of the circumferential outer surface of the metal insert. The first fibre layer can then form at least one turn, preferably more than one turn, such as 2 to 8 turns, around the metal insert, and can cover the entire length of the metal insert.

According to an aspect, the pre-cut has the shape of a trapezoid, with two parallel edges aligned with the length direction of the pre-cut and a third edge arranged substantially perpendicular to the length direction, wherein one of the parallel edges has a length corresponding to the length of the metal insert, and the other one of the parallel edges is at least twice as long. By means of this shape, the wrapped metal insert will taper towards a distal end. This facilitates a smooth integration of the wrapped metal insert in the surrounding composite material.

According to an aspect, the interface layer has the shape of a rectangle, with a first side being as long as the metal insert and a second side having a width corresponding to a circumference of the circumferential outer surface of the metal insert. This ensures the interface layer will cover the entire circumferential outer surface. It is also possible to make the interface layer slightly larger, in particular in the width direction, so that it will form more than exactly one turn, overlapping the first fibre layer in a longitudinally oriented strip.

According to an aspect, when forming the half-finished product, the first side of the interface layer is aligned with the longer one of the two parallel edges of the pre-cut. The metal insert can then be wrapped in the half-finished product starting at the longer one of the parallel edges, thereby forming a helical structure.

According to an aspect, the longitudinal axis of the metal insert is arranged parallel to a longitudinal axis of the wind turbine rotor blade element. This is most suitable for transferring the respective loads.

According to an aspect, the interface layer has a weight in the range of 40 g/m² to 240 g/m² and/or the first fibre layer has a weight in the range of 400 g/m² to 2400 g/m². This means the interface layer is relatively thin.

According to an aspect, a wedge-shaped core material is arranged at a distal end of the metal insert and wrapped in the first fibre layer together with the metal insert. This leads to a tapering thickness of the wrapped insert and to a smooth integration in the surrounding composite material.

In the following, the invention is explained in greater detailed based on an embodiment shown in drawings. The figures show:
- Fig. 1: a half-finished product in a schematic, perspective view;
- Fig. 2: an illustration of the step of wrapping a metal insert in the half-finished product of Fig. 1 in a schematic, perspective view; and
- Fig. 3: a wind turbine rotor blade element schematically shown in cross section.

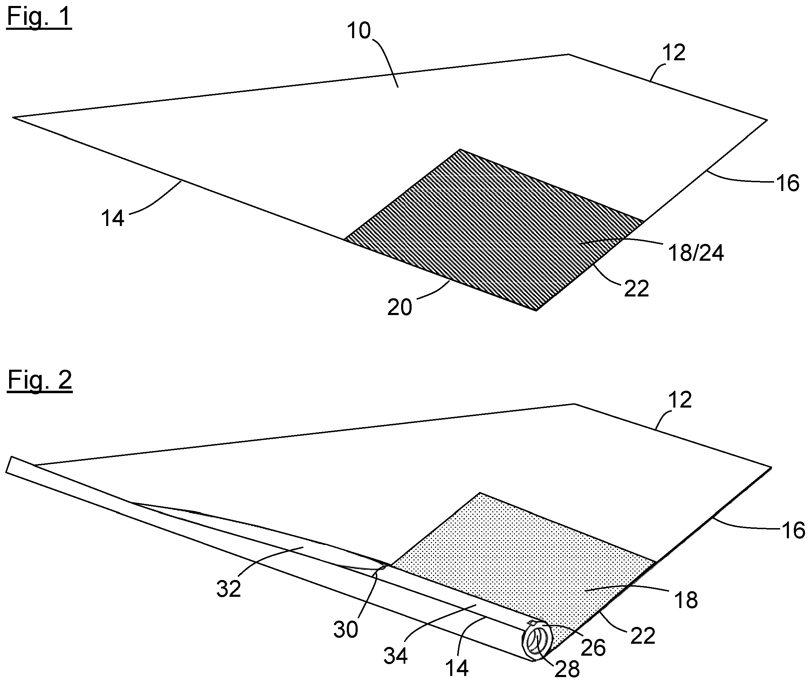

The half-finished product of Fig. 1 comprises a pre-cut of a first fibre layer 10 lying flat on a support which is not shown. The pre-cut has a trapezoidal shape with two parallel edges 12, 14 extending in a length direction of the pre-cut and with a third edge 16 arranged perpendicular thereto. The first fibre layer 10 is a layer of unidirectional fibres extending in the length direction, that is parallel to the parallel edges 12, 14.

On top of the pre-cut, a rectangular interface layer 18 has been positioned such that an edge corresponding to a first side 20 of the rectangle is aligned with the parallel edge 14, and an edge corresponding to a second side 22 of the rectangle is aligned with the third edge 16 of the pre-cut. In Fig. 1, a protective film 24 covers the upper side of the interface layer 18.

In Fig. 2, the protective film 24 has been removed, so that the upper side of the interface layer 18 can be seen. On top of this upper surface, a metal insert 26 has been placed. The metal insert 26 is a cylindrical sleeve made of steel and comprising a circumferential outer surface 34 and a threaded bore 28 forming a joining portion. At a distal end 30 of the metal insert 26, a wedge-shaped core material 32 is arranged, tapering in a direction away from the metal insert 26.

The metal insert 26 together with the wedge-shaped core material 32 is wrapped in the half-finished product. In Fig. 2, about one third of a full rotation has been made, so that the parallel edge 14 of the pre-cut can be seen lying parallel to a longitudinal axis of the metal insert 26, closely adhering at the circumferential outer surface 34.

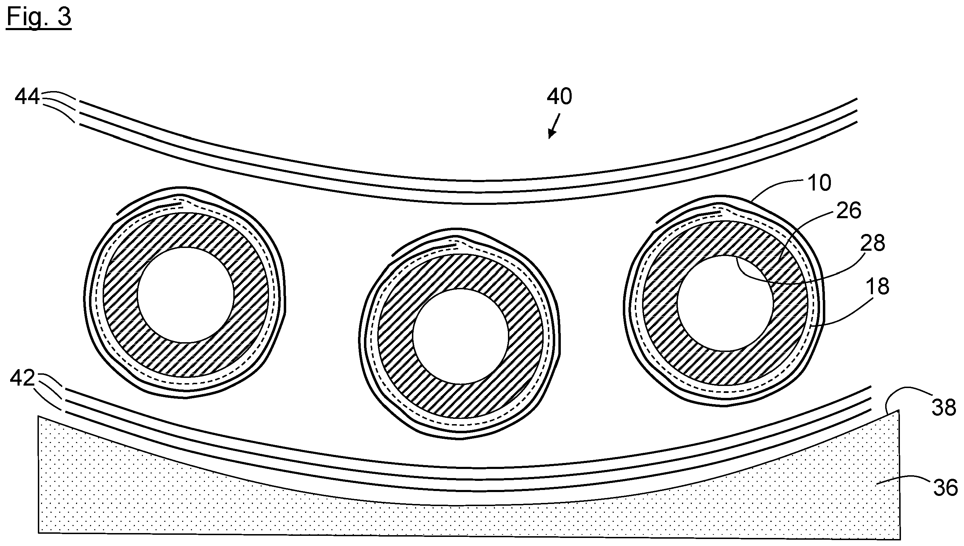

Figure 3 illustrates the inventive method at a later stage, when all of the materials have been placed in a mould 36. The mould 36 has a mould surface 38 at which an outer surface of the wind turbine rotor blade element 40 is formed. On top of the mould surface 38, three layers 42 of a second fibre material are arranged. On top of the uppermost layer 42 one can see three wrapped metal inserts, each comprising a sleeve-shaped metal insert 26 with a threaded bore 28, an interface layer 18 placed in direct contact with the circumferential outer surface 34 of the metal insert 26, and a first fibre layer 10 closely wrapped around the metal insert 66 and the interface layer 18.

On top of the wrapped metal inserts, three further second fibre layers 44 are arranged. Although not shown, it is understood that additional elements may be positioned in the mould 36, in particular additional fibre materials and/or core materials, for example placeholders arranged between the wrapped metal inserts. All of the materials in the mould 36 are embedded in a liquid plastics material (not shown), for example in a vacuum infusion process.

### List of reference numerals

- 10: first fibre layer
- 12: parallel edge of first fibre layer 10
- 14: parallel edge of first fibre layer 10
- 16: third edge of first fibre layer 10
- 18: interface layer
- 20: first side
- 22: second side
- 24: protective film
- 26: metal insert
- 28: threaded bore
- 30: distal end of metal insert
- 32: wedge-shaped core material
- 34: circumferential outer surface
- 36: mould
- 38: mould surface
- 40: wind turbine rotor blade element
- 42: second fibre layer
- 44: second fibre layer

## Claims

1. A method of manufacturing a wind turbine rotor blade element (40), the method comprising the following steps:
• providing a metal insert (26) having a longitudinal axis, a circumferential outer surface (34) and a joining portion for connecting the wind turbine rotor blade element (40) to a wind turbine rotor hub or to another wind turbine rotor blade element,
• wrapping the metal insert (26) in a first fibre layer (10),
• positioning the wrapped metal insert in a mould (36),
• arranging a plurality of second fibre layers (42, 44) in the mould (36),
• embedding the plurality of second fibre layers (42, 44) and the wrapped metal insert in a liquid plastics material,
• curing the liquid plastics material in the mould, **characterized by** the following steps:
• wrapping the metal insert (26) in an interface layer (18) of a curable material such that the interface layer (18) is arranged between the circumferential outer surface (34) and the first fibre layer (10), wherein the entire circumferential outer surface (34) is covered by the interface layer (18) which forms a closed layer substantially impermeable for the liquid plastics material, and
• curing the interface layer (18) in the mould together with the liquid plastics material.

2. The method of claim 1, **characterised in that** in a first step, before wrapping the metal insert (26), a flat, half-finished product is formed which comprises the interface layer (18) and the first fibre layer (10), wherein the half-finished product in a second step is wrapped around the metal insert (26).

3. The method of claim 2, **characterised in that** forming the half-finished product comprises placing the interface layer (18) on top of the first fibre layer (10).

4. The method of claim 3, **characterised in that** forming the half-finished product comprises pressing the interface layer (18) on the first fibre layer (10), while an upper side of the interface layer (18) is covered with a protective film (24).

5. The method of claim 4, **characterised in that** the protective film (24) is removed before or during the second step.

6. The method of any of claims 2 to 4, **characterised in that** wrapping the half-finished product around the metal insert (26) comprises placing the half-finished product on a flat support, placing the metal insert (26) on the half-finished product and rolling the metal insert (26) around its longitudinal axis.

7. The method of any of the claims 1 to 6, **characterised in that** the interface layer (18) is a layer of an adhesive material comprising the same type of polymers as the liquid plastics material.

8. The method of any of the claims 1 to 7, **characterised in that** the first fibre layer (10) is a layer of unidirectional fibres which are aligned with the longitudinal axis of the metal insert (26) when the first fibre layer (10) has been wrapped around the metal insert (26).

9. The method of any of the claims 1 to 8, **characterised in that** the first fibre layer (10) is provided as a pre-cut having a width and a length, wherein the length is larger than a length of the metal insert (26) and the width is larger than a circumference of the circumferential outer surface (34) of the metal insert (26).

10. The method of claim 9, **characterised in that** the pre-cut has the shape of a trapezoid, with two parallel edges (12, 14) aligned with the length direction of the pre-cut and a third edge (16) arranged substantially perpendicular to the length direction, wherein one of the parallel edges (12) has a length corresponding to the length of the metal insert (26), and the other one of the parallel edges (14) is at least twice as long.

11. The method of any of the claims 1 to 10, **characterised in that** the interface layer (18) has the shape of a rectangle, with a first side (20) being as long as the metal insert (26) and a second side (22) having a width corresponding to a circumference of the circumferential outer surface (34) of the metal insert (26).

12. The method of claim 11, **characterised in that** when forming the half-finished product, the first side (20) is aligned with the longer one of the two parallel edges (12, 14) of the pre-cut.

13. The method of any of the claims 1 to 12, **characterised in that** the longitudinal axis of the metal insert (26) is arranged parallel to a longitudinal axis of the wind turbine rotor blade element (40).

14. The method of any of the claims 1 to 13, **characterised in that** the interface layer (18) has a weight in the range of 40 g/m² to 240 g/m² and/or **in that** the first fibre layer (10) has a weight in the range of 400 g/m² to 2400 g/m².

15. The method of any of the claims 1 to 14, **characterised in that** a wedge-shaped core material (32) is arranged at a distal end (30) of the metal insert (26) and wrapped in the first fibre layer (10) together with the metal insert (26).

## Patentansprüche

1. Verfahren zur Herstellung eines Windenergieanlagenrotorblattelements (40), wobei das Verfahren die folgenden Schritte umfasst:
• Vorsehen eines Metalleinsatzes (26), der eine Längsachse, eine äußere Umfangsoberfläche (34) und einen Zusammenfügungsabschnitt zur Verbindung des Windenergieanlagenrotorblattelements (40) mit einer Windenergieanlagenrotornabe oder mit einem anderen Windturbinenrotorblattelement umfasst,
• Einhüllen des Metalleinsatzes (26) in eine erste Faserschicht (10),
• Positionieren des eingehüllten Metalleinsatzes in einer Form (36),
• Anordnen einer Vielzahl von zweiten Faserschichten (42, 44) in der Form (36),
• Einbetten der Vielzahl von zweiten Faserschichten (42, 44) und des eingehüllten Metalleinsatzes in ein flüssiges Kunststoffmaterial,
• Härten des flüssigen Kunststoffmaterials in der Form, **gekennzeichnet durch** die folgenden Schritte:
• Einhüllen des Metalleinsatzes (26) in eine Zwischenschicht (18) aus einem härtbaren Material, sodass die Zwischenschicht (18) zwischen der äußeren Umfangsoberfläche (34) und der ersten Faserschicht (10) angeordnet ist, wobei die gesamte äußere Umfangsoberfläche (34) von der Zwischenschicht (18) bedeckt ist, die eine geschlossene Schicht bildet, die im Wesentlichen undurchlässig für das flüssige Kunststoffmaterial ist, und
• Härten der Zwischenschicht (18) in der Form zusammen mit dem flüssigen Kunststoffmaterial.

2. Verfahren nach Anspruch 1, **dadurch gekennzeichnet, dass** in einem ersten Schritt, vor Einhüllen des Metalleinsatzes (26), ein flaches, halbfertiges Produkt gebildet wird, das die Zwischenschicht (18) und die erste Faserschicht (10) umfasst, wobei das halbfertige Produkt in einem zweiten Schritt um den Metalleinsatz (26) gehüllt wird.

3. Verfahren nach Anspruch 2, **dadurch gekennzeichnet, dass** das Bilden des halbfertigen Produkts ein Platzieren der Zwischenschicht (18) auf der ersten Faserschicht (10) umfasst.

4. Verfahren nach Anspruch 3, **dadurch gekennzeichnet, dass** das Bilden des halbfertigen Produkts ein Drücken der Zwischenschicht (18) auf die erste Faserschicht (10), während eine obere Seite der Zwischenschicht (18) mit einer Schutzfolie (24) bedeckt ist, umfasst.

5. Verfahren nach Anspruch 4, **dadurch gekennzeichnet, dass** die Schutzfolie (24) vor oder während des zweiten Schritts entfernt wird.

6. Verfahren nach einem beliebigen der Ansprüche 2 bis 4, **dadurch gekennzeichnet, dass** das Hüllen des halbfertigen Produkts um den Metalleinsatz (26) ein Platzieren des halbfertigen Produkts auf einem flachen Träger, ein Platzieren des Metalleinsatzes (26) auf dem halbfertigen Produkt und ein Rollen des Metalleinsatzes (26) um seine Längsachse umfasst.

7. Verfahren nach einem beliebigen der Ansprüche 1 bis 6, **dadurch gekennzeichnet, dass** die Zwischenschicht (18) eine Schicht aus einem Haftmaterial ist, das die gleiche Art von Polymeren wie das flüssige Kunststoffmaterial umfasst.

8. Verfahren nach einem beliebigen der Ansprüche 1 bis 7, **dadurch gekennzeichnet, dass** die erste Faserschicht (10) eine Schicht aus unidirektionalen Fasern ist, die mit der Längsachse des Metalleinsatzes (26) ausgerichtet sind, nachdem die erste Faserschicht (10) um den Metalleinsatz (26) gehüllt wurde.

9. Verfahren nach einem beliebigen der Ansprüche 1 bis 8, **dadurch gekennzeichnet, dass** die erste Faserschicht (10) als ein Zuschnitt mit einer Breite und einer Länge vorgesehen ist, wobei die Länge größer als eine Länge des Metalleinsatzes (26) ist und die Breite größer als ein Umfang der äußeren Umfangsoberfläche (34) des Metalleinsatzes (26) ist.

10. Verfahren nach Anspruch 9, **dadurch gekennzeichnet, dass** der Zuschnitt die Form eines Trapezes mit zwei parallelen Kanten (12, 14), die mit der Längsrichtung des Zuschnitts ausgerichtet sind, und einer dritten Kante (16), die im Wesentlichen senkrecht zu der Längsrichtung angeordnet ist, aufweist, wobei eine der parallelen Kanten (12) eine Länge aufweist, die der Länge des Metalleinsatzes (26) entspricht, und die andere der parallelen Kanten (14) mindestens doppelt so lang ist.

11. Verfahren nach einem beliebigen der Ansprüche 1 bis 10, **dadurch gekennzeichnet, dass** die Zwischenschicht (18) die Form eines Rechtecks aufweist, mit einer ersten Seite (20), die so lang wie der Metalleinsatz (26) ist, und einer zweiten Seite (22), die eine Breite aufweist, die einem Umfang der äußeren Umfangsoberfläche (34) des Metalleinsatzes (26) entspricht.

12. Verfahren nach Anspruch 11, **dadurch gekennzeichnet, dass**, beim Bilden des halbfertigen Produkts, die erste Seite (20) mit der längeren der zwei parallelen Kanten (12, 14) des Zuschnitts ausgerichtet ist.

13. Verfahren nach einem beliebigen der Ansprüche 1 bis 12, **dadurch gekennzeichnet, dass** die Längsachse des Metalleinsatzes (26) parallel zu einer Längsachse des Windenergieanlagenrotorblattelements (40) angeordnet ist.

14. Verfahren nach einem beliebigen der Ansprüche 1 bis 13, **dadurch gekennzeichnet, dass** die Zwischenschicht (18) ein Gewicht im Bereich von 40 g/m² bis 240 g/m² aufweist, und/oder dadurch, dass die erste Faserschicht (10) ein Gewicht im Bereich von 400 g/m² bis 2400 g/m² aufweist.

15. Verfahren nach einem beliebigen der Ansprüche 1 bis 14, **dadurch gekennzeichnet, dass** ein keilförmiges Kernmaterial (32) an einem distalen Ende (30) des Metalleinsatzes (26) vorgesehen ist und zusammen mit dem Metalleinsatz (26) in die erste Faserschicht (10) eingehüllt wird.

## Revendications

1. Procédé de fabrication d'un élément de pale de rotor d'éolienne (40), le procédé comprenant les étapes suivantes :
• mise à disposition d'un insert métallique (26) présentant un axe longitudinal, une surface extérieure circonférentielle (34) et une partie de jonction destinée à relier l'élément de pale de rotor d'éolienne (40) à un moyeu de rotor d'éolienne ou à un autre élément de pale de rotor d'éolienne,
• enveloppement de l'insert métallique (26) dans une première couche de fibres (10),
• positionnement de l'insert métallique enveloppé dans un moule (36),
• agencement d'une pluralité de deuxièmes couches de fibres (42, 44) dans le moule (36),
• enrobage de la pluralité de deuxièmes couches de fibres (42, 44) et de l'insert métallique enveloppé dans une matière plastique liquide,
• durcissement de la matière plastique liquide dans le moule, **caractérisé par** les étapes suivantes :
• enveloppement de l'insert métallique (26) dans une couche d'interface (18) d'une matière durcissable, de sorte que la couche d'interface (18) est agencée entre la surface extérieure circonférentielle (34) et la première couche de fibres (10), dans lequel l'ensemble de la surface extérieure circonférentielle (34) est recouvert par la couche d'interface (18) formant une couche fermée substantiellement imperméable à la matière plastique liquide, et
• durcissement de la couche d'interface (18) dans le moule, conjointement avec la matière plastique liquide.

2. Procédé selon la revendication 1, **caractérisé en ce que** dans une première étape, avant l'enveloppement de l'insert métallique (26), un produit plat semifini est formé, lequel comprend la couche d'interface (18) et la première couche de fibres (10), dans lequel le produit semifini est enveloppé autour de l'insert métallique (26) dans une deuxième étape.

3. Procédé selon la revendication 2, **caractérisé en ce que** la formation du produit semifini comprend la disposition de la couche d'interface (18) sur le dessus de la première couche de fibres (10).

4. Procédé selon la revendication 3, **caractérisé en ce que** la formation du produit semifini comprend la pression de la couche d'interface (18) sur la première couche de fibres (10), tandis qu'un côté supérieur de la couche d'interface (18) est recouvert avec un film de protection (24).

5. Procédé selon la revendication 4, **caractérisé en ce que** le film de protection (24) est retiré avant ou pendant la deuxième étape.

6. Procédé selon l'une quelconque des revendications 2 à 4, **caractérisé en ce que** l'enveloppement du produit semifini autour de l'insert métallique (26) comprend la disposition du produit semifini sur un support plat, la disposition de l'insert métallique (26) sur le produit semifini et l'enroulement de l'insert métallique (26) autour de son axe longitudinal.

7. Procédé selon l'une quelconque des revendications 1 à 6, **caractérisé en ce que** la couche d'interface (18) est une couche d'une matière adhésive comprenant le même type de polymères que la matière plastique liquide.

8. Procédé selon l'une quelconque des revendications 1 à 7, **caractérisé en ce que** la première couche de fibres (10) est une couche de fibres unidirectionnelles, lesquelles sont alignées avec l'axe longitudinal de l'insert métallique (26) lorsque la première couche de fibres (10) a été enveloppée autour de l'insert métallique (26).

9. Procédé selon l'une quelconque des revendications 1 à 8, **caractérisé en ce que** la première couche de fibres (10) est fournie comme un élément prédécoupé présentant une largeur et une longueur, dans lequel la longueur est plus grande qu'une longueur de l'insert métallique (26) et la largeur est plus grande qu'une circonférence de la surface extérieure circonférentielle (34) de l'insert métallique (26).

10. Procédé selon la revendication 9, **caractérisé en ce que** l'élément prédécoupé présente la forme d'un trapézoïde, avec deux bords parallèles (12, 14) alignés avec la direction longitudinale de l'élément prédécoupé et un troisième bord (16) agencé substantiellement perpendiculairement à la direction longitudinale, dans lequel l'un des bords parallèles (12) présente une longueur correspondant à la longueur de l'insert métallique (26), et l'autre des bords parallèles (14) est au moins deux plus long.

11. Procédé selon l'une quelconque des revendications 1 à 10, **caractérisé en ce que** la couche d'interface (18) présente la forme d'un rectangle, avec un premier côté (20) aussi long que l'insert métallique (26) et un deuxième côté (22) présentant une largeur correspondant à une circonférence de la surface extérieure circonférentielle (34) de l'insert métallique (26).

12. Procédé selon la revendication 11, **caractérisé en ce que** lors de la formation du produit semifini, le premier côté (20) est aligné avec le plus long des deux bords parallèles (12, 14) de l'élément prédécoupé.

13. Procédé selon l'une quelconque des revendications 1 à 12, **caractérisé en ce que** l'axe longitudinal de l'insert métallique (26) est agencé parallèlement à un axe longitudinal de l'élément de pale de rotor d'éolienne (40).

14. Procédé selon l'une quelconque des revendications 1 à 13, **caractérisé en ce que** la couche d'interface (18) a un poids compris entre 40 g/m² et 240 g/m² et/ou **en ce que** la première couche de fibres (10) a un poids compris entre 400 g/m² et 2400 g/m².

15. Procédé selon l'une quelconque des revendications 1 à 14, **caractérisé en ce qu'**une matière de noyau en forme de coin (32) est agencée à une extrémité distale (30) de l'insert métallique (26) et enveloppée dans la première couche de fibres (10) conjointement avec l'insert métallique (26).
